# EUROPÄISCHE PATENTANMELDUNG

(11) **EP 1 949 830 A1**
(43) Veröffentlichungstag der Anmeldung: **30.07.2008**
(21) Anmeldenummer: 08100750.2
(22) Anmeldetag: 22.01.2008
(51) Int. Cl.: A47J 31/60

(54) **Maschine zur Herstellung von Brühgetränken**

(30) Priorität: 25.01.2007 DE 202007001114 U
(71) Anmelder: MELITTA HAUSHALTSPRODUKTE GmbH & Co. Kommanditgesellschaft, D-32427 Minden (DE)
(72) Erfinder: Lötzsch, Rebecca, 32427, Minden (DE)
(74) Vertreter: Dantz, Jan Henning

(57) **Zusammenfassung**

Eine Maschine zur Herstellung von Brühgetränken, insbesondere von Kaffee, umfasst einen Wassertank, eine Brüheinrichtung und eine Ausgabeeinrichtung, die über Leitungen miteinander verbunden sind, wobei die Maschine mindestens einen Tank mit Reinigungsflüssigkeit aufweist. Dadurch kann eine manuelle Zugabe von Tabletten, Pulver oder Flüssigkeit zur Reinigung und/oder Entkalkung für jeden Reinigungsvorgang entfallen, was die Handhabung vereinfacht.

## Beschreibung

Die vorliegende Erfindung betrifft eine Maschine zur Herstellung von Brühgetränken, insbesondere von Kaffee, mit einem Wassertank, einer Brüheinrichtung und einer Ausgabeeinrichtung, die über Leitungen miteinander verbunden sind.

Aus der EP 1 625 813 ist ein Kaffeeautomat offenbart, bei dem ein abnehmbarer Wassertank, eine Brühvorrichtung und eine Ausgabeeinrichtung vorgesehen sind. Für das Aufbrühen eines Getränkes wird Wasser aus dem Wassertank zu der Brühvorrichtung gepumpt und dort unter Wärme und Druck Kaffee aufgebrüht. Bei solchen Kaffeeautomaten besteht das Problem, dass diese in regelmäßigen Abständen gereinigt werden müssen. Gängige Kaffeeautomaten benutzen hierzu Tabletten, Fluide oder Pulver, die dann nach einem vorbestimmten Programmablauf zur Reinigung und/oder Entkalkung der Leitungen und/oder Kammern verwendet werden. Dies wird vom Benutzer als mühsam empfunden, da der Reinigungs- und Entkalkungsvorgang relativ lange dauert und der Benutzer darauf achten muss, dass in regelmäßigen Interwallen eine solche Reinigung stattfindet, um eine Verschmutzung des Kaffeeautomaten zu verhindern.

Es ist daher Aufgabe der vorliegenden Erfindung, bei einer Maschine zur Herstellung von Brühgetränken der eingangs genannten Art den Reinigungsvorgang zu vereinfachen.

Diese Aufgabe wird mit einer Maschine zur Herstellung von Brühgetränken mit den Merkmalen des Anspruches 1 gelöst.

Erfindungsgemäß weist die Maschine mindestens einen Tank mit Reinigungsflüssigkeit auf, so dass eine manuelle Zugabe von Tabletten, Pulver oder Flüssigkeit zur Reinigung und/oder Entkalkung entfallen kann. Der Benutzer muss nicht mehr darauf achten, entsprechende Reinigungs- und Entkalkungsmittel im Haushalt verfügbar zu haben, sondern die Reinigungsflüssigkeit ist in der Maschine bevorratet enthalten und kann entsprechend hygienischen Vorgaben genutzt werden. Sofern in der vorliegenden Anmeldung der Begriff "Tank mit Reinigungsflüssigkeit" verwendet wird, kann diese Reinigungsflüssigkeit auch nur zur Entkalkung eingesetzt werden. Der Begriff "Reinigung" soll in diesem Zusammenhang auch ein Entkalken umfassen, wobei getrennte Reinigungsmittel und Entkalkungsmittel verwendet werden können. Die Reinigung und/oder Entkalkung der Maschine kann dabei in festen Intervallen, nach einer bestimmten Anzahl von Brühvorgängen oder abhängig von einer Verbrauchserfassung erfolgen.

Gemäß einer bevorzugten Ausgestaltung der Erfindung ist der Tank mit Reinigungsflüssigkeit an der Leitung zwischen Wassertank und Brüheinrichtung angeschlossen. Dadurch kann für einen Reinigungsvorgang das komplette Leitungssystem von der Leitung, die zu dem Wassertank führt, bis zu der Ausgabeeinrichtung für das Brühgetränk mit der Reinigungsflüssigkeit gereinigt werden.

Vorzugsweise ist ein Dosierventil vorgesehen, mittels dem die Menge an zugeführter Reinigungsflüssigkeit dosierbar ist. Denn abhängig von der Dauer der Nichtbenutzung oder der Anzahl der Brühvorgänge kann die Intensität der erforderlichen Reinigung variieren. Insofern kann über das Dosierventil eine gewisse Anpassung an die erforderliche Reinigung erfolgen.

Gemäß einer weiteren Ausgestaltung der Erfindung weist die Maschine eine Steuerung auf, mittels der eine Dosierung der Flüssigkeit zur Reinigung und/oder Entkalkung erfolgen kann. Die Dosierung kann über die Steuerung voreingestellt werden und nach einer vorbestimmten Anzahl von Brühvorgängen, einer vorbestimmten Zeitdauer oder nach einer Verbrauchserfassung automatisch erfolgen. Dadurch wird der Benutzer von der notwendigen Überwachung der Maschine entbunden und die Steuerung kann automatisch die Intervalle oder die Intensität der Reinigung und/oder Entkalkung festlegen.

Der Tank mit Reinigungsflüssigkeit kann dabei als auswechselbare Kartusche ausgebildet sein. Dabei ist es möglich, die Kartuschen als Verbrauchsartikel hygienisch zu handhaben, wobei eine entsprechende Verbindung zwischen der Leitung in der Maschine und der Kartusche hergestellt wird. Alternativ kann der Tank mit Reinigungsflüssigkeit auch mit einem zu öffnenden Deckel für eine Befüllung versehen sein, so dass der Benutzer in den Tank direkt Reinigungsflüssigkeit oder Wasser mit einer Reinigungstablette einfüllen kann.

Gemäß einer weiteren Ausgestaltung der Erfindung können mehrere Tanks mit Reinigungsflüssigkeit vorgesehen sein, die eine unterschiedliche Konzentration an Reinigungsmittel aufweisen. Beispielsweise kann eine kurze Reinigung nach jedem Brühvorgang mit geringer Konzentration eines Reinigungsmittels erfolgen, während in vorbestimmten Interwallen eine höhere Dosierung an konzentrierter Reinigungsflüssigkeit zugeführt wird, um dann eine Grundreinigung durchzuführen. Zudem kann ein erster Tank mit Reinigungsflüssigkeit und ein zweiter Tank mit spezieller Entkalkungsflüssigkeit vorgesehen sein, so dass wahlweise eine reine Reinigung oder Entkalkung stattfinden kann.

Für eine manuelle Auslösung eines Reinigungsvorganges kann die Maschine eine Taste zur Auslösung des Reinigungsvorganges aufweisen.

Eine Maschine zur Herstellung von Brühgetränken, insbesondere von Kaffee, umfasst einen Wassertank, eine Brüheinrichtung und eine Ausgabeeinrichtung, die über Leitungen miteinander verbunden sind. Zwischen dem Wassertank und der Brüheinrichtung ist eine Verbindungsleitung zu einem Tank mit Reinigungsflüssigkeit angeordnet, wobei die Zugabe an Reinigungsflüssigkeit über ein gesteuertes Dosierventil dosiert wird. Der Betrieb einer solchen Maschine zum Herstellen von Brühgetränken kann wie folgt ablaufen:

Zunächst wird Wasser aus dem Wassertank der Brüheinrichtung zugegeben und Kaffee gebrüht. Nach dem Brühvorgang kann eine integrierte Reinigung und/oder Entkalkung erfolgen, in dem automatisch eine gewisse Menge an Reinigungsflüssigkeit dem Leitungssystem zugeführt wird und die Reinigungsflüssigkeit durch die Leitung zu der Brüheinrichtung und von dort zu der Ausgabeeinrichtung geleitet wird. Die Reinigungsflüssigkeit kann dann entsorgt werden, wobei das Leitungssystem durch Wasser aus dem Wassertank gespült wird.

Eine solche automatische Reinigung kann entweder nach jedem Brühvorgang oder nach einer vorbestimmten Anzahl von Brühvorgängen, beispielsweise nach vier Brühvorgängen erfolgen. Zudem kann auch die Dauer der Nichtbenutzung der Maschine zur Herstellung von Brühgetränken mit berücksichtigt werden.

Statt einer automatischen Reinigung nach einer vorbestimmten Anzahl von Brühvorgängen kann auch eine Taste zur Auslösung eines Reinigungsvorganges vorgesehen sein, so dass der Benutzer selbst entscheidet, in welchen Abständen eine Reinigung erfolgt. Sofern ein Tank mit reiner Entkalkungsflüssigkeit vorgesehen ist, kann auch eine zweite Taste zur Auslösung eines Entkalkungsvorganges vorgesehen sein.

Zudem kann eine Signallampe oder eine Anzeige vorgesehen sein, die dem Benutzer den Hinweis gibt, dass eine Reinigung und/oder Entkalkung des Leitungssystems mit der Brühkammer erfolgen sollte. Sofern der Tank mit Reinigungsflüssigkeit einen gewissen Füllstand unterschreitet, kann dem Benutzer über eine Signallampe oder eine Anzeige der Hinweis gegeben werden, dass Reinigungsmittel oder Entkalkungsmittel in den jeweiligen Tank nachgefüllt werden muss.

## Patentansprüche

1. Maschine zur Herstellung von Brühgetränken, insbesondere von Kaffee, mit einem Wassertank, einer Brüheinrichtung und einer Ausgabeeinrichtung, die über Leitungen miteinander verbunden sind, **dadurch gekennzeichnet, dass** die Maschine mindestens einen Tank mit Reinigungsflüssigkeit aufweist.

2. Maschine nach Anspruch 1, **dadurch gekennzeichnet, dass** der Tank mit Reinigungsflüssigkeit an die Leitung zwischen Wassertank und Brüheinrichtung angeschlossen ist.

3. Maschine nach Anspruch 1 oder 2, **dadurch gekennzeichnet, dass** ein Dosierventil vorgesehen ist, mittels dem die Menge an zugeführter Reinigungsflüssigkeit dosierbar ist.

4. Maschine nach einem der Ansprüche 1 bis 3, **dadurch gekennzeichnet, dass** die Maschine eine Steuerung aufweist und eine Zugabe von Reinigungsflüssigkeit für einen Reinigungsvorgang nach einer vorbestimmten Anzahl von Brühvorgängen und/oder einer vorbestimmten Zeitdauer automatisch erfolgt.

5. Maschine nach einem der Ansprüche 1 bis 4, **dadurch gekennzeichnet, dass** der Tank mit Reinigungsflüssigkeit als auswechselbare Kartusche ausgebildet ist.

6. Maschine nach einem der Ansprüche 1 bis 5, **dadurch gekennzeichnet, dass** der Tank mit Reinigungsflüssigkeit mit einem zu öffnenden Deckel für eine Befüllung versehen ist.

7. Maschine nach einem der Ansprüche 1 bis 6, **dadurch gekennzeichnet, dass** ein Tank mit einer Reinigungsflüssigkeit vorgesehen ist, der ein Entkalkungsmittel enthält.

8. Maschine nach einem der Ansprüche 1 bis 7, **dadurch gekennzeichnet, dass** mehrere Tanks mit Reinigungsflüssigkeit vorgesehen sind, die unterschiedliche Mittel zur Reinigung und/oder Entkalkung aufweisen.

9. Maschine nach einem der Ansprüche 1 bis 8, **dadurch gekennzeichnet, dass** die Maschine eine Taste zur Auslösung eines Reinigungsvorganges aufweist.

10. Maschine nach einem der Ansprüche 1 bis 9, **dadurch gekennzeichnet, dass** die Maschine eine Mischkammer enthält, in der die Reinigungsflüssigkeit zur Verdünnung mit Wasser gemischt werden kann.

11. Maschine nach einem der Ansprüche 1 bis 10, **dadurch gekennzeichnet, dass** Mittel zur Erfassung des Füllstandes des Reinigungsmittels vorgesehen ist, und bei Unterschreiten eines bestimmten Füllstandes an einer Anzeige eine Aufforderung zum Nachfüllen des Reinigungsmittels ausgegeben werden kann.

12. Maschine nach einem der Ansprüche 1 bis 11, **dadurch gekennzeichnet, dass** eine Anzeige vorgesehen ist, an der eine Aufforderung zur Betätigung einer Taste zur Auslösung eines Reinigungs- und/oder Entkalkungsvorganges ausgegeben werden kann.
